# EUROPÄISCHE PATENTSCHRIFT

(11) **EP 1 249 319 B1**
(45) Veröffentlichungstag und Bekanntmachung des Hinweises auf die Patenterteilung: **17.09.2008**
(21) Anmeldenummer: 02007557.8
(22) Anmeldetag: 03.04.2002
(51) Int. Cl.: B25J 15/02

(54) **Greifer mit zwei schwenkbaren Greifarmen, deren Hebelkräfte unterschiedlich sind**
Gripper with two pivoting gripping arms having different leverage
Pince de préhension à deux bras ayant des forces de levier différentes

(30) Priorität: 12.04.2001 DE 10118372
(43) Veröffentlichungstag der Anmeldung: 16.10.2002
(73) Patentinhaber: Lebschi, Josef, 72587 Römerstein (DE)
(72) Erfinder: Lebschi, Josef, 72587 Römerstein (DE); Lebschi, Rene, 72587 Römerstein (DE)
(74) Vertreter: Ruckh, Rainer Gerhard

(56) Entgegenhaltungen:
- DE-U- 20 100 104
- JP-A- 58 196 991
- PATENT ABSTRACTS OF JAPAN vol. 1995, no. 01, 28. Februar 1995 (1995-02-28) -& JP 06 278065 A (TOYODA MACH WORKS LTD), 4. Oktober 1994 (1994-10-04)

## Beschreibung

Die Erfindung betrifft einen Greifer. Derartige Greifer dienen zum Aufgreifen von Werkstücken unterschiedlichster Ausprägung. Dabei werden die Greifer insbesondere bei Robotern oder allgemein im Bereich der Automatisierungstechnik eingesetzt.

Eine wesentliche Anforderung der genannten Greifer besteht darin, dass mit diesem reproduzierbar ein positionsgenaues Aufgreifen der Werkstücke durchgeführt werden kann. Dabei wird zudem eine hohe Robustheit und Lebensdauer bei geringer Verschleißauffälligkeit derartiger Greifer gefordert.

Bekannte Greifer dieser Art weisen beispielsweise einen verschiebbaren Greifarm auf, welcher gegen einen feststehenden Anschlag bewegt werden kann. Mittels derartiger Greifsysteme wird das jeweilige Werkstück durch Andrücken mittels des Greifarmes gegen den Anschlag eingespannt.

Nachteilig hierbei ist, dass das Werkstück während des Spannvorgangs nicht in einer Ausgangsposition verbleibt sondern gegen den Anschlag des Greifers gedrückt wird. Die Position des Werkstückes ist somit bei dem Greifvorgang nicht exakt vorgebbar. Zudem bleibt das Werkstück bei Öffnen des Greifers in der Position des Anschlags. Wird dann der Greifer vom Werkstück entfernt, besteht zudem die Gefahr, dass durch Anstoßen des Anschlags gegen das Werkstück dessen Position in undefinierter Weise geändert wird.

Eine höhere Positionsgenauigkeit des zu greifenden Werkstückes lässt sich mit Parallelgreifern erreichen, die zwei axial verschiebbare Greifarme aufweisen. Prinzipiell lässt sich die zentrierende Bewegung der Greifarme durch einen pneumatischen Antrieb erreichen. Dabei ist dem Antrieb ein Mechaniksystem zur Umsetzung der Antriebsbewegung auf die Greifarme nachgeordnet. Derartige Mechaniksysteme sind jedoch konstruktiv aufwendig und müssen zudem fortlaufend geschmiert werden.

Aus der DE 201 00 104 U1 ist ein weiterer Parallelgreifer bekannt. Dieser Greifer weist zwei Greiferbacken auf, die mittels zweier Pneumatikzylinder unabhängig voneinander gesteuert werden können. Mittels der Pneumatikzylinder können die Greiferbacken zeitversetzt und/oder mit unterschiedlichen Geschwindigkeiten bewegt werden.

Nachteilig hierbei ist zum einen, dass die Zeit- und Geschwindigkeitssteuerung relativ schwierig durchführbar ist, wobei insbesondere das positionsgenaue Aufgreifen eines Werkstückes einen hohen Aufwand bei der Steuerung voraussetzt, um die Bewegung der Greiferbacken genau aufeinander abzustimmen.

Weiterhin ist nachteilig, dass die separate Ansteuerung der Pneumatikzylinder selbst einen unerwünscht hohen Konstruktionsaufwand bedingt. Um die Pneumatikzylinder separat zu steuern, muss für jeden Pneumatikzylinder die Druckluftzufuhr über separate Ventile und Druckluftanschlüsse einzeln gesteuert werden.

Aus der JP 58 196 991 A ist ein gattungsgemäßer Greifer bekannt, welcher zwei zangenförmige, schwenkbar gelagerte Greifarme aufweist. Die Greifarme sind jeweils mittels eines Pneumatikzylinders betätigbar. Die Greifarme sind jeweils bezüglich einer Schwenkachse schwenkbar gelagert. Die beiden Pneumatikzylinder sind in unterschiedlichen Höhen am Greifer gelagert. Durch diese Anordnung wird ein Greifarm zum Master-Greifarm, mit welchem bezüglich des zweiten, einen Slave-Greifarm bildenden Greifarm eine erhöhte Hebelkraft auf das Werkstück ausgeübt wird. Die beiden Greifarme sind im Bereich oberhalb der Schwenkachsen mit einer Feder verbunden, durch welche die oberen Enden der Greifarme zusammengezogen werden. Diese Federkräfte wirken den von den Pneumatikzylindern auf die Greifarme ausgeübten Kräften entgegen.

Der Erfindung liegt die Aufgabe zugrunde, einen Greifer der eingangs genannten Art bereitzustellen, welcher einen möglichst robusten, verschleißfreien und einfachen Aufbau aufweist, und mittels dessen ein reproduzierbares, positionsgenaues Aufgreifen von Werkstücken ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße Greifer weist zwei pneumatisch betätigbare und schwenkbar gelagerte, zangenförmige Greifarme auf. Einer der Greifarme bildet einen Master-Greifarm, mittels dessen zur Positionierung eines aufzugreifenden Werkstückes eine bezüglich des zweiten, einen Slave-Greifarm bildenden Greifarmes erhöhte Hebelkraft auf das Werkstück ausübt wird. Jeder Greifarm ist bezüglich einer Schwenkachse gelagert, welche den jeweiligen Greifarm in zwei Hebelarme unterteilt, wobei der erste Hebelarm zum Greifen des Werkstückes dient und wobei an dem zweiten Hebelarm ein Pneumatikzylinder zur Erzeugung der Hebelkraft für das Greifen des Werkstückes angreift. Das freie Ende des zweiten Hebelarmes jedes Greifarmes ist zwischen dem zugeordneten Pneumatikzylinder und einer eine Rückstellkraft ausübenden Rückstellfeder angeordnet, wobei zur Aufnahme der Rückstellfedern ein ein Gehäuseteil bildender Rahmen vorgesehen ist.

Durch die Asymmetrie der von den Greifarmen des zangenförmigen Greifers auf das Werkstück ausgeübten Hebelkräfte ist die Position des Werkstückes bei Aufgreifen durch den erfindungsgemäßen Greifer auf einfache Weise genau und reproduzierbar vorgebbar.

Dabei gibt der Master-Greifarm durch seine größere Hebelkraft die Position des Werkstückes vor, in dem er das Werkstück gegen den Slave-Greifarm drückt, bis der Master-Greifarm seine definierte Endposition einnimmt. Der Slave-Greifarm dient lediglich als Halt für das Werkstück während des Aufgreifvorganges.

Die Komponenten des Greifers sind so dimensioniert, dass bei Aufgreifen des Werkstückes der zweite Hebelarm des Master-Greifarmes gegen die Rückstellfeder bis zu einem Anschlag gedrückt wird, der die Endposition des Master-Greifarmes festlegt und damit die Position des Werkstückes vorgibt. Dabei ist wesentlich, dass in dieser Greifstellung der Slave-Greifarm noch nicht gegen den zugeordneten Anschlag gedrückt ist, so dass der Slave-Greifarm noch die notwendige Gegenkraft aufbringen kann, um das Werkstück festzuhalten.

Prinzipiell können die unterschiedlichen Hebelkräfte des Master-Greifarmes und des Slave-Greifarmes dadurch erzeugt werden, dass die Pneumatikzylinder einzeln angesteuert werden, wodurch diese den Master-Greifarm und den Slave-Greifarm auf unterschiedliche Weise auslenken. Nachteilig hierbei ist jedoch der relativ hohe Aufwand für die Einzelansteuerung der Pneumatikzylinder.

Weiterhin können prinzipiell unterschiedliche Hebelkräfte der Greifarme dadurch erzeugt werden, dass die Rückstellfedern unterschiedlich ausgebildet sind und so unterschiedliche Rückstellkräfte generieren. Nachteilig hierbei ist, dass zur reproduzierbaren Erzeugung der unterschiedlichen Rückstellkräfte hohe Anforderungen an die Qualität der Rückstellfedern zu stellen sind. Insbesondere müssen die Rückstellfedern hinreichend große Rückstellkräfte erzeugen. Diese Anforderungen sind nur mit einem erhöhten Kostenaufwand zu erfüllen, da die Rückstellfedern generell eine hohe Verschleißanfälligkeit aufweisen.

In einer besonders vorteilhaften Ausführungsform der Erfindung werden die unterschiedlichen Hebelkräfte der Greifarme dadurch erzeugt, dass die Pneumatikzylinder in unterschiedlichen Abständen zur Schwenkachse der jeweiligen Greifarme angeordnet sind. Die geometrisch asymmetrische Anordnung der Pneumatikzylinder relativ zu den Schwenkachsen kann konstruktiv auf einfache Weise am Greifer vorgegeben werden, wodurch eine einfache und reproduzierbare Vorgabe der unterschiedlichen Hebelkräfte der Greifarme ermöglicht wird. Besonders vorteilhaft sind die Greifarme in symmetrischer Anordnung an einem Rahmen des Greifers angeordnet, wobei die Pneumatikzylinder in unterschiedlichen Anbringhöhen am Rahmen oberhalb der Schwenkachsen der Greifarme befestigt sind. Der so ausgebildete Greifer weist einen besonders einfachen und robusten Aufbau auf.

Dabei ist insbesondere vorteilhaft, dass die Pneumatikzylinder zur Betätigung der Greifarme vollkommen identisch ausgebildet sein können und zudem über einen gemeinsamen Anschluss mit Druckluft versorgt werden können. Im Vergleich zu einer separaten Ansteuerung der Pneumatikzylinder ist für diese Anordnung ein beträchtlich verminderter Aufwand zur Ansteuerung der Pneumatikzylinder notwendig.

In einer vorteilhaften Ausführungsform sind die Pneumatikzylinder als Membran-Pneumatikzylinder ausgebildet. Die das Betätigungselement zur Auslenkung eines Greifarmes bildende Membran passt sich an unterschiedliche Schräglagen des jeweiligen Greifarmes an. Dadurch kann der jeweilige Greifarm ohne Gelenke oder sonstige mechanische Umsetzungen direkt über den Pneumatikzylinder in die jeweilige Schwenkposition ausgelenkt werden.

Weiterhin ist vorteilhaft, dass die Endposition des Master-Greifarmes auf einfache Weise über die Position des zugeordneten Anschlags geändert werden kann, wobei in einer besonders einfachen und zweckmäßigen Ausführungsform der Anschlag von einer Einstellschraube gebildet ist.

Die Erfindung wird im Nachstehenden anhand der Zeichnungen erläutert. Es zeigen:
- Figur 1:: Schematische Darstellung eines Ausführungsbeispiels des erfindungsgemäßen Greifers mit in einer ersten Endposition liegenden Greifarmen.
- Figur 2:: Greifer gemäß Figur 1 mit in einer zweiten Endposition liegenden Greifarmen.
- Figur 3:: Draufsicht auf einen Greifarm des Greifers gemäß Figuren 1 und 2.

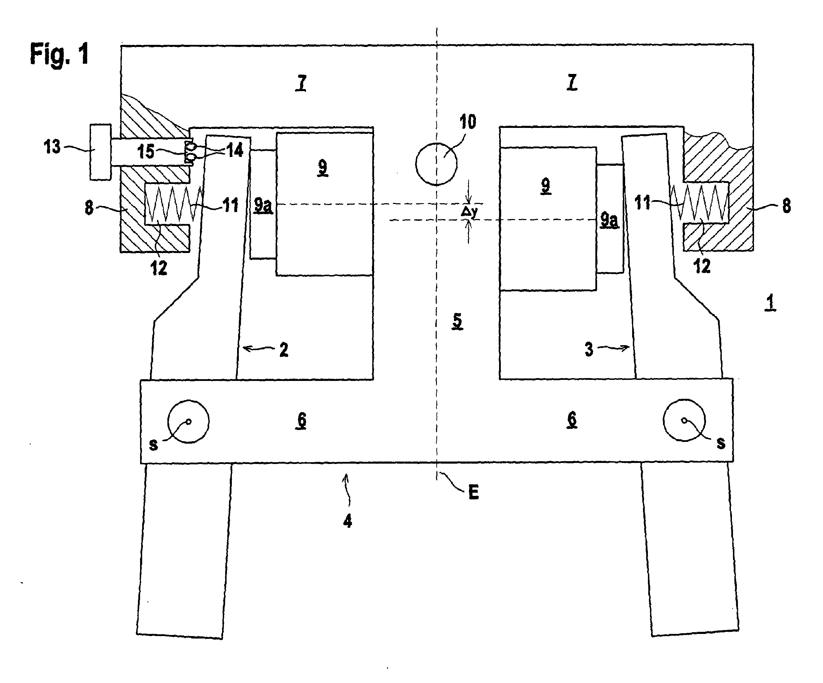

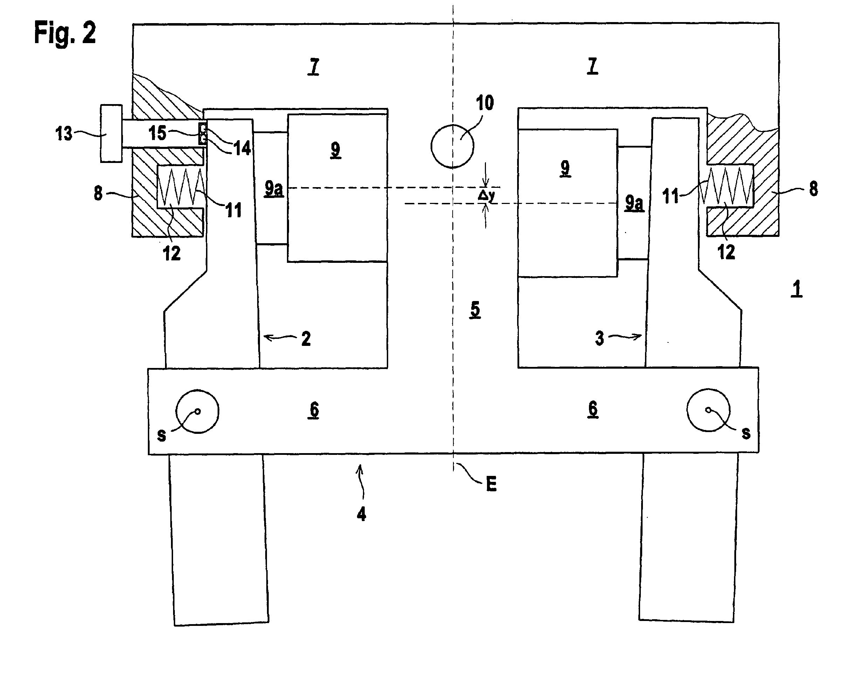

Die Figuren 1 und 2 zeigen ein Ausführungsbeispiel des erfindungsgemäßen Greifers 1 zum Aufgreifen von nicht gesondert dargestellten Werkstücken. Der Greifer 1 bildet einen Zangengreifer mit zwei pneumatisch betätigbaren, schwenkbar gelagerten zangenförmigen Greifarmen. Ein erster Greifarm bildet einen dominierenden, die Position des Werkstückes bei dessen Aufgreifen vorgebenden Master-Greifarm 2, während der zweite Greifarm einen Slave-Greifarm 3 bildet.

Figur 1 zeigt die Greifarme in einer ersten Endposition vor Aufgreifen eines Werkstückes bei geöffneter Zangenstellung des Greifers 1.

Figur 2 zeigt denselben Greifer 1 mit den Greifarmen in einer zweiten Endposition bei aufgegriffenem Werkstück.

Der Greifer 1 gemäß den Figuren 1 und 2 weist einen metallischen Rahmen 4 auf, der ein Gehäuseteil des Greifers 1 bildet. Der Rahmen 4 weist einen im Wesentlichen H-förmigen Querschnitt auf. Dabei weist der Rahmen 4 ein in vertikaler Richtung verlaufendes, zentrales Rahmensegment 5 auf. Am unteren Rand des Rahmensegments 5 münden an dessen gegenüberliegenden Seitenwänden zwei horizontal verlaufende Haltearme 6 aus. An den freien Enden dieser Haltearme 6 ist jeweils ein Greifarm bezüglich einer horizontal verlaufenden Schwenkachse S schwenkbar gelagert. Am oberen Rand des Rahmensegments 5 münden an dessen gegenüberliegenden Seitenwänden zwei horizontal verlaufende Trägerarme 7 aus. An den freien Enden der Trägerarme 7 ist jeweils ein Trägersegment 8 vorgesehen, welches von der Unterseite des jeweiligen Trägerarmes 7 hervorsteht.

Die den Rahmen 4 bildenden Haltearme 6, Trägerarme 7, Trägersegmente 8 sowie das Rahmensegment 5 sind einstückig ausgebildet, wobei der so gebildete Rahmen 4 symmetrisch zu einer in vertikaler Richtung verlaufenden Symmetrieebene E ausgebildet ist. Die identisch ausgebildeten Greifarme sind ebenfalls symmetrisch zu dieser Symmetrieebene E angeordnet.

Durch die Lagerung in der jeweiligen Schwenkachse S ist jeder Greifarm in einen unteren ersten Hebelarm und in einen zweiten oberen Hebelarm unterteilt.

Die ersten Hebelarme der Greifarme dienen zum Aufgreifen eines Werkstückes. Je nach Ausbildung des Werkstückes können an den ersten Hebelarmen geeignete Adapter in Form von Greifbacken oder dergleichen befestigt werden.

Die zweiten Hebelarme der Greifarme sind jeweils zwischen einem Pneumatikzylinder 9 und dem zugeordneten Trägersegment 8 angeordnet. Die identisch ausgebildeten Pneumatikzylinder 9 sind als Membran-Pneumatikzylinder 9 ausgebildet. Die Pneumatikzylinder 9 werden über einen gemeinsamen Anschluss 10 mit Druckluft versorgt. Durch Zufuhr von Druckluft über den Anschluss 10 werden die Pneumatikzylinder 9 in gleicher Weise betätigt, wodurch die Vorderseite der Membran 9a jedes Pneumatikzylinders 9 in Richtung eines Hebelarmes eines Greifarmes geschoben wird, so dass dieser in Richtung des jeweiligen Trägersegments 8 gedrückt wird. Da die Membranen 9a der Pneumatikzylinder 9 flexibel sind, passen sich deren Vorderseiten an die jeweiligen Schrägstellungen der Hebelarme an, wobei die entsprechend schrägliegende Vorderseite einer Membran 9a in jeder Schwenkposition des zugeordneten Greifarmes vollständig und dicht auf der Oberfläche des jeweiligen Hebelarmes aufliegt.

Die durch Betätigung der Pneumatikzylinder 9 bewirkte Schwenkbewegung erfolgt jeweils gegen eine Rückstellfeder 11, die über die Frontseite des zugeordneten Trägersegments 8 hervorsteht. Wie in den Figuren 1 und 2 dargestellt. weist der Greifer 1 zwei identisch ausgebildete Rückstellfedern 11 auf, wobei jeweils eine der Rückstellfedern 11 in einer Ausnehmung 12 des jeweiligen Trägersegments 8 gelagert ist. Jede Ausnehmung 12 mündet an der Frontseite des jeweiligen Trägersegments 8 aus. Die darin gelagerte Rückstellfeder 11 steht im entspannten Zustand über die Ausnehmung 12 hervor. Bei Betätigen des zugeordneten Pneumatikzylinders 9 wird der jeweilige zweite Hebelarm des Greifarmes gegen die Rückstellfeder 11 gedrückt, so dass diese in die Ausnehmung 12 eingeschoben wird. Zweckmäßigerweise sind die Rückstellfedern 11 als konische Spiralfedern ausgebildet, die sich zu ihrem vorderen, über die Ausnehmung 12 hervorstehenden Ende hin verjüngen. Damit werden die einzelnen Spiralen der Rückstellfedern 11 bei Druckbeaufschlagung ineinander geschoben, wodurch diese auf eine geringe Resthöhe komprimierbar sind.

Die Bewegungen der zweiten Hebelarme der Greifarme gegen die Rückstellfedern 11 sind jeweils durch einen Anschlag begrenzt. Der Slave-Greifarm 3 wird gegen einen feststehenden Anschlag geführt, der von der Frontseite des zugeordneten Trägersegments 8 gebildet ist.

Der Master-Greifarm 2 wird gegen einen positionsverstellbaren Anschlag geführt. Der Anschlag ist von dem Vorderende einer Einstellschraube 13 gebildet, welche das dem Master-Greifarm 2 zugeordnete Trägersegment 8 durchsetzt. Die Einstellschraube 13 ist von der Außenseite des Rahmens 4 betätigbar, wodurch das Vorderende der Einstellschraube 13 um einen definierten Einstellweg über die Frontseite des Trägersegments 8 übersteht.

An dem Vorderende der Einstellschraube 13 ist ein Dämpfungselement angeordnet. Das Dämpfungselement ist von einem O-Ring 14 gebildet, der in einer Einkerbung 15 am Vorderende der Einstellschraube 13 gelagert ist. Bei Andrücken des zweiten Hebelarmes des Master-Greifarmes 2 gegen die Einstellschraube 13 wird der O-Ring 14 in die Einkerbung 15 gepresst, bis der Hebelarm an der Frontfläche der Einstellschraube 13 anliegt.

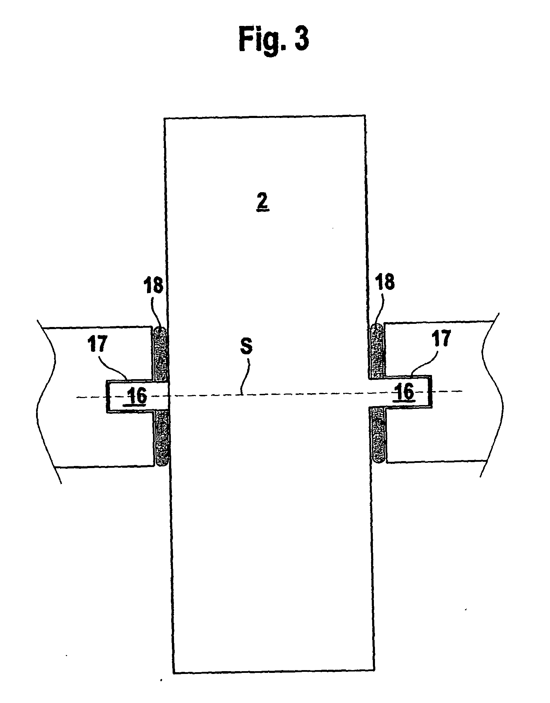

Wie aus Figur 3 ersichtlich, sind die Greifarme im vorliegenden Fall der Master-Greifarme 2 im Wesentlichen plattenförmig ausgebildet und weisen einen rechteckigen Querschnitt auf. An den längsseitigen Rändern eines Greifarmes steht jeweils ein kreiszylindrischer Lagerzapfen 16 hervor. Die in der Schwenkachse S verlaufenden Lagerzapfen 16 sind in Lagern 17 der Haltearme 6 drehbar gelagert. Durch die seitlich von dem Greifarm hervorstehenden Lagerzapfen 16 wird eine spielfreie Lagerung des Greifarmes am Haltearm 6 erzielt, welche insbesondere nahezu keine Verkippungen des Greifarmes zulässt. Durch eine an das Vorderende des Lagers 17 anschließende Lagerscheibe 18, die am seitlichen Rand des Greifarmes anliegt, wird eine spielfreie Axialführung des Greifarmes gewährleistet.

Die Dominanz des Master-Greifarmes 2 über den Slave-Greifarm 3 wird erfindungsgemäß dadurch erreicht, dass der dem Master-Greifarm 2 zugeordnete Pneumatikzylinder 9 höher liegt als der dem Slave-Greifarm 3 zugeordnete Pneumatikzylinder 9. Im vorliegenden Fall beträgt die Höhendifferenz Δy der am zentralen Rahmensegment 5 an gegenüberliegenden Seiten angeordneten Pneumatikzylinder 9 etwa 10% der Höhendifferenz der Pneumatikzylinder 9 zu den Haltearmen 6 mit den daran schwenkbar gelagerten Greifarmen.

Durch diese asymmetrische Anordnung der Pneumatikzylinder 9 wird erreicht, dass die vom Master-Greifarm 2 auf ein aufzugreifendes Werkstück ausgeübte Hebelkraft größer ist als die vom Slave-Greifarm 3 ausgeübte Hebelkraft. Dadurch kann mit dem Master-Greifarm 2 bei Aufgreifen eines Werkstückes dessen Position exakt und reproduzierbar vorgegeben werden. Die Einstellung der Werkstückposition erfolgt durch Einstellen des Anschlags für den Master-Greifarm 2 durch Betätigen der Einstellschraube 13.

Die Funktionsweise des erfindungsgemäßen Greifers 1 ist aus den Figuren 1 und 2 ersichtlich. Figur 1 zeigt den Greifer 1 vor Aufgreifen eines Werkstückes bei nicht betätigten Pneumatikzylindern 9. Die Greifarme liegen in ihren ersten Endpositionen, wobei dabei die Rückstellfedern 11 die zweiten Hebelarme der Greifarme gegen die Membrane 9a der nicht betätigten Pneumatikzylinder 9 drücken. Dabei stehen die Rückstellfedern 11 über die Ausnehmungen 12 der Trägersegmente 8 hervor. In der ersten Endposition bilden die ersten Hebelarme eine offenstehende Zange, die auf das Werkstück führbar ist.

Zum Aufgreifen des Werkstückes werden die Pneumatikzylinder 9 betätigt, wobei durch die Ausdehnung der Membranen 9a der Pneumatikzylinder 9 die ersten Hebelarme der Greifarme in Richtung der Anschläge gedrückt werden. Dabei werden die Rückstellfedern 11 in die Ausnehmungen 12 eingeschoben. Durch die Schenkbewegung der Greifarme werden die ersten Hebelarme aufeinander zubewegt, d.h. die Zange des Greifers 1 schließt sich, wodurch das Werkstück aufgegriffen wird.

Da die vom Master-Greifarm 2 auf das Werkstück ausgeübte Hebelkraft größer ist als die vom Slave-Greifarm 3 ausgeübte Hebelkraft, gibt der Master-Greifarm 2 die Position des Werkstückes beim Aufgreifen vor, wogegen der Slave-Greifarm 3 lediglich eine Gegenkraft zum Festhalten des Werkstückes generiert.

In der zweiten in Figur 2 dargestellten Endposition der Greifarme des Greifers 1 ist der Aufgreifvorgang abgeschlossen. Dabei liegt der Master-Greifarm 2 an dem von der Einstellschraube 13 gebildeten Anschlag an. Wesentlich hierbei ist, dass in der zweiten Endposition der Slave-Greifarm 3 noch nicht am Anschlag anliegt, so dass dieser noch die Gegenkraft zum Festhalten des Werkstückes aufbringen kann. Durch Betätigen der Einstellschraube 13 vor Beginn des Aufgreifvorgangs kann die Sollposition des Werkstückes bei dessen Aufgreifen einfach und genau vorgegeben werden.

### Bezugszeichenliste

- (1): Greifer
- (2): Master-Greifarm
- (3): Slave-Greifarm
- (4): Rahmen
- (5): Rahmensegment
- (6): Haltearm
- (7): Trägerarm
- (8): Trägersegment
- (9): Pneumatikzylinder
- (9a): Membran
- (10): Anschluss
- (11): Rückstellfeder
- (12): Ausnehmung
- (13): Einstellschraube
- (14): O-Ring
- (15): Einkerbung
- (16): Lagerzapfen
- (17): Lager
- (18): Lagerscheibe

- S: Schwenkachse
- E: Symmetrieebene

## Patentansprüche

1. Greifer mit zwei pneumatisch betätigbaren und schwenkbar gelagerten, zangenförmigen Greifarmen, wobei einer der Greifarme einen Master-Greifarm (2) bildet, mittels dessen zur Positionierung eines aufzugreifenden Werkstückes eine bezüglich des zweiten, einen Slave-Greifarmes (3) bildenden Greifarmes erhöhte Hebelkraft auf das Werkstück ausgeübt wird, wobei jeder Greifarm bezüglich einer Schwenkachse (S) gelagert ist, welche den jeweiligen Greifarm in zwei Hebelarme unterteilt, wobei der erste Hebelarm zum Greifen des Werkstückes dient und wobei an dem zweiten Hebelarm ein Pneumatikzylinder (9) zur Erzeugung der Hebelkraft für das Greifen des Werkstückes angreift, **dadurch gekennzeichnet, dass** das freie Ende des zweiten Hebelarmes jedes Greifarmes zwischen dem zugeordneten Pneumatikzylinder (9) und einer eine Rückstellkraft ausübenden Rückstellfeder (11) angeordnet ist, wobei zur Aufnahme der Rückstellfedern (11) ein ein Gehäuseteil bildender Rahmen vorgesehen ist.

2. Greifer nach Anspruch 1, **dadurch gekennzeichnet, dass** der Abstand des Angriffspunkts des Pneumatikzylinders (9) am zweiten Hebelarm zur Schwenkachse (S) beim Master-Greifarm (2) größer ist als beim Slave-Greifatm (3).

3. Greifer nach einem der Ansprüche 1 oder 2, **dadurch gekennzeichnet, dass** jeder Rückstellfeder (11) ein die Bewegung des zugeordneten Greifarmes begrenzender Anschlag zugeordnet ist.

4. Greifer nach Anspruch 3, **dadurch gekennzeichnet, dass** die Position des dem Master-Greifarm (2) zugeordneten Anschlags einstellbar ist.

5. Greifer nach einem der Ansprüche 1 bis 4, **dadurch gekennzeichnet, dass** der das Gehäuseteil bildende Rahmen (4) zur Aufnahme der Greifarme und der Pneumatikzylinder (9) dient.

6. Greifer nach Anspruch 5, **dadurch gekennzeichnet, dass** der Rahmen (4) einen im Wesentlichen H-förmigen Querschnitt aufweist, wobei an gegenüberliegenden Seiten eines in vertikaler Richtung verlaufenden zentralen Rahmensegments (5) jeweils ein Pneumatikzylinder (9) angeordnet ist, und wobei am unteren Ende des zentralen Rahmensegments (5) zwei horizontal verlaufende Haltearme (6) zur Aufnahme der Greifarme ausmünden, wobei diese symmetrisch zur in vertikaler Richtung verlaufenden Symmetrieachse des Rahmens (4) angeordnet sind.

7. Greifer nach Anspruch 6, **dadurch gekennzeichnet, dass** der dem Master-Greifarm (2) zugeordnete Pneumatikzylinder (9) gegenüber dem dem Slave-Greifarm (3) zugeordneten Pneumatikzylinder (9) erhöht am zentralen Rahmensegment (5) angeordnet ist.

8. Greifer nach Anspruch 7, **dadurch gekennzeichnet, dass** die Pneumatikzylinder (9) von identisch ausgebildeten Membran-Pneumatikzylinder gebildet sind.

9. Greifer nach einem der Ansprüche 7 oder 8, **dadurch gekennzeichnet, dass** die Pneumatikzylinder (9) über einen gemeinsamen Anschluss (10) mit Druckluft versorgt werden.

10. Greifer nach einem der Ansprüche 8 oder 9, **dadurch gekennzeichnet, dass** die Membran (9a) eines Pneumatikzylinders (9) eine verformbare Auflagefläche für den zugeordneten Hebelarm eines Greifarmes bildet.

11. Greifer nach einem der Ansprüche 6 bis 10, **dadurch gekennzeichnet, dass** am oberen Ende des zentralen Rahmensegments (5) zwei horizontale Trägerarme (7) ausmünden, wobei von der Unterseite am freien Ende jedes Trägerarmes (7) ein Trägersegment (8) zur Aufnahme jeweils einer Rückstellfeder (11) hervorsteht.

12. Greifer nach Anspruch 11, **dadurch gekennzeichnet, dass** jede Rückstellfeder (11) in einer Ausnehmung (12) des jeweiligen Trägersegments (8) gelagert ist, die an dessen dem Greifarm zugeordneten Frontseite ausmündet, an welcher sich der Anschlag befindet.

13. Greifer nach Anspruch 12, **dadurch gekennzeichnet, dass** jede Rückstellfeder (11) von einer konischen Spiralfeder gebildet ist.

14. Greifer nach einem der Ansprüche 12 oder 13, **dadurch gekennzeichnet, dass** die ebene Frontseite eines Trägersegments (8) einen Anschlag zur Begrenzung der Bewegung eines Greifarmes bildet.

15. Greifer nach einem der Ansprüche 12 bis 14, **dadurch gekennzeichnet, dass** das dem Master-Greifarm (2) zugeordnete Trägersegment (8) von einer Einstellschraube (13) durchsetzt ist, dessen über die Frontseite des Trägersegments (8) hervorstehendes Vorderende einen einstellbaren Anschlag bildet.

16. Greifer nach einem der Ansprüche 12 bis 15, **dadurch gekennzeichnet, dass** an wenigstens einem Anschlag ein Dämpfungselement vorgesehen ist.

17. Greifer nach Anspruch 16, **dadurch gekennzeichnet, dass** das Dämpfungselement von einem O-Ring (14) gebildet ist, welcher in einer Einkerbung (15) am Vorderende der Einstellschraube (13) gelagert ist.

18. Greifer nach einem der Ansprüche 5 bis 17, **dadurch gekennzeichnet, dass** jeder Greifarm plattenförmig ausgebildet ist und einen im Wesentlichen rechteckigen Querschnitt aufweist.

19. Greifer nach Anspruch 18, **dadurch gekennzeichnet, dass** von den längsseitigen Rändern eines Greifarmes jeweils ein Lagerzapfen (16) hervorsteht, wobei die in der Schwenkachse (S) des Greifarmes verlaufenden Lagerzapfen (16) in jeweils einem Lager (17) des zugeordneten Haltearmes (6) des Rahmens (4) gelagert sind.

20. Greifer nach Anspruch 19, **dadurch gekennzeichnet, dass** an das Vorderende eines Lagers (17) jeweils eine Lagerscheibe (18) zur axialen Lagerung des jeweiligen Greifarmes anschließt.

21. Greifer nach einem der Ansprüche 18 bis 20, **dadurch gekennzeichnet, dass** der erste Hebelarm eines Greifarmes Mittel zur Aufnahme eines Adapters aufweist.

## Claims

1. Gripper with two pneumatically actuable and pivotably mounted tongs-shaped gripper arms, wherein one of the gripper arms forms a master gripper arm (2) by means of which, for positioning a workpiece to be gripped, there is exerted on the workpiece a lever force increased relative to the second gripper arm, which forms a slave gripper arm (3), wherein each gripper arm is mounted with respect to a pivot axis (S) subdividing the respective gripper arm into two lever arms, wherein the first lever arm serves for gripping the workpiece and wherein a pneumatic cylinder (9) for producing the lever force for gripping the workpiece acts on the second lever arm, **characterised in that** the free end of the second lever arm of each gripper arm is arranged between the associated pneumatic cylinder (9) and a restoring spring (11) exerting a restoring force, wherein a frame forming a housing part is provided for reception of the restoring springs (11).

2. Gripper according to claim 1, **characterised in that** the spacing of the point of action of the pneumatic cylinder (9) at the second lever arm from the pivot axis (S) is greater for the master gripper arm (2) than for the slave gripper arm (3).

3. Gripper according to one of claims 1 and 2, **characterised in that** an abutment limiting the movement of the associated gripper arm is associated with each restoring spring (11).

4. Gripper according to claim 3, **characterised in that** the position of the abutment associated with the master gripper arm (2) is settable.

5. Gripper according to any one of claims 1 to 4, **characterised in that** the frame (4) forming the housing part serves for reception of the gripper arms and the pneumatic cylinders (9).

6. Gripper according to claim 5, **characterised in that** the frame (4) has a substantially H-shaped cross-section, wherein a respective pneumatic cylinder (9) is arranged at each of opposite sides of a central frame segment (5) extending in vertical direction, and wherein two horizontally extending retaining arms (6) for mounting the gripper arms open at the lower end of the central frame segment (5), wherein these retaining arms are arranged symmetrically with respect to the axis of symmetry, which extends in vertical direction, of the frame (4).

7. Gripper according to claim 6, **characterised in that** the pneumatic cylinder (9) associated with the master gripper arm (2) is arranged at the central frame segment (5) to be elevated relative to the pneumatic cylinder (9) associated with the slave gripper arm (3).

8. Gripper according to claim 7, **characterised in that** the pneumatic cylinders (9) are formed by identically constructed diaphragm pneumatic cylinders.

9. Gripper according to one of claims 7 and 8, **characterised in that** the pneumatic cylinders (9) are supplied with compressed air by way of a common connection (10).

10. Gripper according to one of claims 8 and 9, **characterised in that** the diaphragm (9a) of a pneumatic cylinder (9) forms a deformable support surface for the associated lever arm of a gripper arm.

11. Gripper according to any one of claims 6 to 10, **characterised in that** two horizontal support arms (7) open at the upper end of the central frame segment (5), wherein a support segment (8) for reception of a respective restoring spring (11) protrudes from the underside at the free end of each support arm (7).

12. Gripper according to claim 11, **characterised in that** each restoring spring (11) is mounted in a recess (12) of the respective support segment (8), which recess opens at the front side thereof which is associated with the gripper arm and at which the abutment is located.

13. Gripper according to claim 12, **characterised in that** each restoring spring (11) is formed by a conical spiral spring.

14. Gripper according to one of claims 12 and 13, **characterised in that** the planar front side of a support segment (8) forms an abutment for limitation of the movement of a gripper arm.

15. Gripper according to any one of claims 12 to 14, **characterised in that** the support segment (8) associated with the master gripper arm (2) is penetrated by a setting screw (13), the front end - which protrudes beyond the front side of the support segment (8) - of which forms an adjustable abutment.

16. Gripper according to any one of claims 12 to 15, **characterised in that** a damping element is provided at at least one abutment.

17. Gripper according to claim 16, **characterised in that** the damping element is formed by an O-ring (14) which is mounted in a notch (15) at the front end of the setting screw (13).

18. Gripper according to any one of claims 5 to 17, **characterised in that** each gripper arm is of plate-shaped construction and has a substantially rectangular cross-section.

19. Gripper according to claim 18, **characterised in that** a respective bearing pin (16) protrudes from each of the longitudinal edges of a gripper arm, wherein the bearing pins (16) extending in the pivot axis (S) of the gripper arm are each mounted in a respective bearing (17) of the associated retaining arm (6) of the frame (4).

20. Gripper according to claim 19, **characterised in that** a respective bearing washer (18) for axial mounting of the respective gripper arm adjoins the front end of a bearing (17).

21. Gripper according to any one of claims 18 to 20, **characterised in that** the first lever arm of a gripper arm has means for reception of an adapter.

## Revendications

1. Pince de préhension munie de deux bras de préhension en forme de mors, actionnables pneumatiquement et montés à pivotement, l'un desdits bras formant un bras principal de préhension (2) au moyen duquel, en vue du positionnement d'une pièce devant être saisie, une force de levier, accrue vis-à-vis du second bras formant un bras asservi de préhension (3), est appliquée à ladite pièce, sachant que chaque bras de préhension est monté vis-à-vis d'un axe de pivotement (S) qui scinde le bras de préhension considéré en deux bras de levier, sachant que le premier bras de levier sert à saisir la pièce, et sachant qu'un vérin pneumatique (9) est en prise avec le second bras de levier en vue d'engendrer la force de levier destinée à saisir ladite pièce, **caractérisée par le fait que** l'extrémité libre du second bras de levier de chaque bras de préhension est interposée entre le vérin pneumatique associé (9) et un ressort de rappel (11) développant une force de rappel, un cadre, matérialisant une partie de carter, étant prévu pour recevoir les ressorts de rappel (11).

2. Pince de préhension selon la revendication 1, **caractérisée par le fait que** la distance comprise entre l'axe de pivotement (S) et le point de venue en prise du vérin pneumatique (9) avec le second bras de levier est plus grande, sur le bras principal de préhension (2), que sur le bras asservi de préhension (3).

3. Pince de préhension selon l'une des revendications 1 ou 2, **caractérisée par le fait qu'**une butée, limitant le mouvement du bras de préhension associé, est affectée à chaque ressort de rappel (11).

4. Pince de préhension selon la revendication 3, **caractérisée par le fait que** l'emplacement de la butée affectée au bras principal de préhension (2) peut être réglé.

5. Pince de préhension selon l'une des revendications 1 à 4, **caractérisée par le fait que** le cadre (4), matérialisant la partie de carter, sert à recevoir les bras de préhension et les vérins pneumatiques (9).

6. Pince de préhension selon la revendication 5, **caractérisée par le fait que** le cadre (4) présente une section transversale sensiblement configurée en H, sachant qu'un vérin pneumatique respectif (9) est implanté sur des côtés mutuellement opposés d'un segment central d'encadrement (5) s'étendant dans le sens vertical, et sachant que deux bras de levier (6) s'étendant horizontalement débouchent à l'extrémité inférieure dudit segment central d'encadrement (5), en vue de recevoir les bras de préhension, ces derniers étant agencés symétriquement par rapport à l'axe de symétrie du cadre (4), s'étendant dans le sens vertical.

7. Pince de préhension selon la revendication 6, **caractérisée par le fait que** le vérin pneumatique (9) affecté au bras principal de préhension (2) occupe, vis-à-vis du vérin pneumatique (9) affecté au bras asservi de préhension (3), une position rehaussée sur le segment central d'encadrement (5).

8. Pince de préhension selon la revendication 7, **caractérisée par le fait que** les vérins pneumatiques (9) sont formés par des vérins pneumatiques à membranes, de réalisations identiques.

9. Pince de préhension selon l'une des revendications 7 ou 8, **caractérisée par le fait que** les vérins pneumatiques (9) sont alimentés en air comprimé par l'intermédiaire d'un raccord commun (10).

10. Pince de préhension selon l'une des revendications 8 ou 9, **caractérisée par le fait que** la membrane (9a) d'un vérin pneumatique (9) matérialise une surface déformable d'appui, destinée au bras de levier associé d'un bras de préhension.

11. Pince de préhension selon l'une des revendications 6 à 10, **caractérisée par le fait que** deux bras horizontaux de support (7) débouchent à l'extrémité supérieure du segment central d'encadrement (5), un segment de support (8) faisant saillie à l'extrémité libre de chaque bras de support (7), au-delà de la face inférieure, en vue de recevoir un ressort respectif de rappel (11).

12. Pince de préhension selon la revendication 11, **caractérisée par le fait que** chaque ressort de rappel (11) est logé dans un évidement (12) du segment respectif de support (8), lequel logement débouche à la face frontale dudit segment qui est affectée au bras de préhension, et sur laquelle se trouve la butée.

13. Pince de préhension selon la revendication 12, **caractérisée par le fait que** chaque ressort de rappel (11) est formé d'un ressort hélicoïdal conique.

14. Pince de préhension selon l'une des revendications 12 ou 13, **caractérisée par le fait que** la face frontale plane d'un segment de support (8) forme une butée pour limiter le mouvement d'un bras de préhension.

15. Pince de préhension selon l'une des revendications 12 à 14, **caractérisée par le fait que** le segment de support (8), affecté au bras principal de préhension (2), est traversé par une vis de réglage (13) dont l'extrémité antérieure, saillant au-delà de la face frontale dudit segment de support (8), matérialise une butée réglable.

16. Pince de préhension selon l'une des revendications 12 à 15, **caractérisée par le fait qu'**un élément amortisseur est prévu sur au moins une butée.

17. Pince de préhension selon la revendication 16, **caractérisée par le fait que** l'élément amortisseur est formé d'une bague torique (14), logée dans une encoche (15) pratiquée à l'extrémité antérieure de la vis de réglage (13).

18. Pince de préhension selon l'une des revendications 5 à 17, **caractérisée par le fait que** chaque bras de préhension est réalisé en forme de plaque, et possède une section transversale sensiblement rectangulaire.

19. Pince de préhension selon la revendication 18, **caractérisée par le fait qu'**un tourillon (16) fait respectivement saillie au-delà des bords longitudinaux d'un bras de préhension, les tourillons (16), s'étendant suivant l'axe de pivotement (S) dudit bras de préhension, étant respectivement logés dans un coussinet (17) du bras d'arrêt associé (6) du cadre (4).

20. Pince de préhension selon la revendication 19, **caractérisée par le fait qu'**un disque respectif de portée (18) se rattache à l'extrémité antérieure d'un coussinet (17), en vue du montage axial du bras de préhension considéré.

21. Pince de préhension selon l'une des revendications 18 à 20, **caractérisée par le fait que** le premier bras de levier d'un bras de préhension présente des moyens pour recevoir un adaptateur.
